# EUROPÄISCHE PATENTSCHRIFT

(11) **EP 3 165 382 B1**
(45) Veröffentlichungstag und Bekanntmachung des Hinweises auf die Patenterteilung: **30.06.2021**
(21) Anmeldenummer: 16192319.8
(22) Anmeldetag: 05.10.2016
(51) Int. Cl.: B60C 23/00

(54) **BEFÜLLEINRICHTUNG**
FILLING DEVICE
DISPOSITIF DE REMPLISSAGE

(30) Priorität: 09.11.2015 DE 102015222006
(43) Veröffentlichungstag der Anmeldung: 10.05.2017
(73) Patentinhaber: ZF Friedrichshafen AG, 88046 Friedrichshafen (DE)
(72) Erfinder: Langner, Dominik, 94559 Niederwinkling (DE)
(74) Vertreter: ZF Friedrichshafen AG

(56) Entgegenhaltungen:
- WO-A1-2012/084912
- WO-A1-2015/195028
- JP-U- S62 163 404
- US-A1- 2015 231 937
- None

## Beschreibung

Die Erfindung bezieht sich auf eine Befülleinrichtung zur fahrzeugseitigen Innendruckregelung eines Reifens eines Fahrzeugrades, mit einer drehbar gelagerten Flanschwelle, die an ihrem einen Ende einen radial erweiterten Anflanschteller zum Anflanschen einer Felge aufweist, wobei die Flanschwelle durch eine Koaxialöffnung eines drehfesten Achstrichters ragt, mit einem ersten Druckkanal, der axial in der Flanschwelle ausgebildet ist und mit seinem ersten Ende an einem ersten Druckabgang am Anflanschteller axial nach außen mündet, sowie mit einem zweiten Drucckanal, der axial in der Flanschwelle ausgebildet ist und mit seinem ersten Ende an einem zweiten Druckabgang am Anflanschteller axial nach außen mündet, wobei das zweite Ende des ersten Druckkanals sowie das zweite Ende des zweiten Druckkanals axial zueinander versetzt, radial an der umlaufenden Mantelfläche der Fanschwelle nach außen in die Flanschwelle umschließende Luftringkanäle münden, die jeweils zwischen einem Paar drehfest am Achstrichter angeordneter, die Flanschwelle umschließender Luftdichtringe gebildet sind und von denen ein erster Druckanschluß bzw. ein zweiter Druckanschluß, die im Achstrichter ausgebildet sind, zur radial umlaufenden Außenmantelfläche des Achstrichters führen, wobei in die Koaxialöffnung des Achstrichters ein ringartiger Dichtungsträger drehfest eingesetzt ist, in dessen radial umlaufender Innenöffnung die Paare von Luftdichtringen koaxial zueinander angeordnet sind, wobei der Dichtungsträger im Bereich zwischen jedem Paar der Luftdichtringe an seiner inneren radial umlaufenden Mantelfläche eine Innenringnut und an seiner äußeren radial umlaufenden Mantelfläche eine Außenringnut aufweist, wobei die erste Innenringnut mit der ihr radial zugeordneten erste Außenringnut verbunden ist und die zweite Innenringnut mit der ihr radial zugeordneten zweiten Außenringnut verbunden ist und wobei die erste Außenringnut mit dem ersten Druckanschluß und die zweite Außenringnut mit dem zweiten Druckanschluß verbunden ist.

Derartige Befülleinrichtungen kommen unter anderem bei landwirtschaftlichen oder kommunalen Nutzfahrzeugen zur Anwendung, bei welchen für die Straßenfahrt und den jeweiligen Arbeitseinsatz unterschiedliche Reifeninnendrücke angestrebt werden. So ist beim Befahren einer asphaltierten Straße ein höherer Innendruck der Reifen für eine bessere Seitenführung, einen guten Wirkungsgrad und einen niedrigeren Kraftstoffverbrauch vorteilhaft, während bei Befahren eines weichen Bodens, wie beispielsweise einem Ackerboden, geringere Reifeninnendrücke zu bevorzugen sind. Denn mit geringerem Reifeninnendruck vergrößert sich die Reifenkontaktfläche zum Boden, so dass die Druckbelastung des Bodens aufgrund der größeren Aufstandsfläche vermindert wird. Hierdurch wird die Spur flacher und ertragsschädliche Bodenverdichtungen werden vermieden. Eine Befülleinrichtung eines Fahrzeugrades steht dabei dann zumeist mit einem fahrzeugseitigen Druckregelsystem in Verbindung, welches eine Anpassung des Reifeninnendrucks der jeweiligen Bereifung an den aktuellen Betriebszustand und ggf. Last und Geschwindigkeit vornimmt.

Bei derartigen Befülleinrichtungen (WO 2012/084912 A1, US 2015 23 1937 A1, WO 2015/195028 A1) sind der erste Druckanschluß und der zweite Druckanschluß jeweils in einer in eine Radialbohrung des Achstrichters eingesetzten Hülse angeordnet, wobei die radial inneren Enden der Hülse zur Halterung und Positionierung der Luftdichtringe dienen. Dieser Aufbau aufwendig sowie die Montage der Befülleinrichtung nur schwierig durchführbar. Zwischen den Paaren von Luftdichtringen kann es zu einem Luftausgleich kommen.

Aufgabe der Erfindung ist es daher eine Befülleinrichtung der eingangs genannten Art zu schaffen, die einen vor Verschmutzung geschützten, kostengünstigen und einfachen Aufbau aufweist und einfach montierbar ist sowie einen Druckausgleich zwischen den Paaren von Luftdichtringen vermeidet.

Diese Aufgabe wird erfindungsgemäß dadurch gelöst, dass von einem Ringbereich zwischen den beiden Paaren von Luftdichtringen ein radialer Entlüftungskanal zu einem an der äußeren Mantelfläche des Dichtungsträgers oder des Distanzrings ausgebildeten radial umlaufenden Entlüftungsringkanal führt, der über eine im Achstrichter ausgebildete Lüftungsbohrung zur radial umlaufenden Außenmantelfläche des Achstrichters führt, wobei der radiale Entlüftungskanal durch den Dichtungsträger oder durch einen Distanzring zu dem Entlüftungsringkanal führt, wobei bei der Durchführung durch den Distanzring der Dichtungsträger aus einem ersten Dichtungsträgerteil und einem dazu koaxialen zweiten Dichtungsträgerteil besteht, axial zwischen denen der Distanzring angeordnet ist.

Durch die Anordnung der Befülleinrichtung innerhalb des Achstrichters können Verschmutzungen, Feuchtigkeit und anderen Umwelteinflüsse nicht oder nur schwer zur Befülleinrichtung gelangen und diese beschädigen.

Da alle Teile der Befülleinrichtung axial insbesondere nur von einer Seite her durch die Koaxialöffnung des Achstrichters montiert werden, ist die Montage einfach durchführbar.

Weiterhin sind die Luftdichtringe an dem Dichtungsträger vormontierbar und mit dem Dichtungsträger bis in ihre Sollposition in die Koaxialöffnung des Achstrichters einführbar, so dass auch dies die Montage vereinfacht.

Darüber hinaus wird eine Entlüftung im Bereich zwischen den einander zugewandten Luftdichtringen der beiden Paare von Luftdichtringen erhalten und damit ein Druckausgleich vermieden.

Wenn der Dichtungsträger aus einem ersten Dichtungsträgerteil und einem dazu koaxialen zweiten Dichtungsträgerteil besteht, die zueinander gegensinnig und koaxial angeordnet werden, führt dies zur einer einfachen und kostengünstigen Ausbildung.

Damit können die beiden Dichtungsträgerteile als Gleichteile ausgebildet sein, was zu einer Kostenreduzierung und zu einem einfacheren Aufbau der Befülleinrichtung führt.

Um einen ausreichenden axialen Abstand zwischen den zweiten Enden des ersten und zweiten Druckkanals sicherzustellen, kann axial zwischen dem ersten Dichtungsträgerteil und dem zweiten Dichtungsträgerteil ein Distanzring angeordnet sein. Radial innerhalb des Dichtungsträgers kann auf der Flanschwelle ein Laufring drehfest angeordnet sein, der einen von dem zweiten Ende des ersten Druckkanals zu dem einen Luftringkanal führenden ersten radialen Durchgang und einen von dem zweiten Ende des zweiten Druckkanals zu dem anderen Luftringkanal führenden zweiten radialen Durchgang aufweist wobei die Luftdichtringe in Gleitkontakt mit der zylindrischen äußeren Mantelfläche des Laufrings sind.

Damit kann in unaufwendiger Weise die äußere radial umlaufende Mantelfläche feinbearbeitet werden, um den Verschleiß der darauf gleitenden Luftdichtringe gering zu halten.

Zur drehfesten Anordnung des Laufrings auf der Flanschwelle kann der Laufring zumindest über einen Teil seiner Länge auf die Flanschwelle aufgepresst sein.

Der Laufring kann mit dem Dichtungsträger und den Luftdichtringen eine vormontierbare Baugruppe bilden, die dann einfach in ihre Sollposition in die Koaxialöffnung des Achstrichters einführbar ist.

Weiterhin kann an dem einen axialen Ende des Dichtungsträgers ein erster Wellendichtring und an dem zweiten axialen Ende des Dichtungsträgers zweiter Wellendichtring angeordnet sein, die die Flanschwelle umschließen.

Damit sind auch die Wellendichtringe mit den Luftdichtringen an dem Dichtungsträger vormontierbar und als vormontierte Baugruppe in die Sollposition in die Koaxialöffnung des Achstrichters einführbar.

Durch die Wellendichtringe ist der innere Bereich des Achstrichters, in dem die Befülleinrichtung angeordnet ist, öldicht nach außen verschlossen.

Zur Verschleißminderung können dabei die Wellendichtringe in Gleitkontakt mit der zylindrischen äußeren Mantelfläche des Laufrings sein.

Zur drehbaren Lagerung kann die Flanschwelle mittels in die Koaxialöffnung des Achstrichters eingesetzter Wälzlager drehbar gelagert sein, wobei axial auf jeder Seite des Dichtungsträgers ein Wälzlager angeordnet ist, wobei vorzugsweise die Wälzlager in O-Anordnung angeordnete Kegelrollenlager sind.

Zur einfachen Montage des Dichtungsträgers der Befülleinrichtung kann das eine Ende des Dichtungsträgers an einem Anschlagring des Achstrichters und das andere Ende des Dichtungsträgers direkt oder indirekt an dem Außenring eines der Wälzlager axial abgestützt sein.

Dabei hat der Dichtungsträger bei seinem Einführen in die Koaxialöffnung des Achstrichters seine korrekte Sollposition erreicht, wenn er zur Anlage an dem Anschlagring gelangt ist.

Sind in den einander zugewandten Endbereichen des ersten Dichtungsträgerteils und des zweiten Dichtungsträgerteils und ggf. in dem Distanzring zur Drehachse der Flanschwelle parallele und zueinander koaxiale Positionierbohrungen ausgebildet, in die ein gemeinsamer Positionierzapfen eingesetzt ist, so werden die beiden Dichtungsträgerteile und ggf. der Distanzring durch den Positionierzapfen in ihrer Sollposition zueinander ausgerichtet gehalten.

Damit kann die Baueinheit aus den Dichtungsträgerteilen und den Luftringdichtungen und ggf. den Wellendichtringen gegen relativverdrehen zueinander gesichert in die Koaxialöffnung des Achstrichters eingeführt und positioniert werden.

Der Dichtungsträger oder der erste Dichtungsträgerteil kann über einen Distanzring an dem Außenring des Wälzlagers axial abgestützt sein, wobei in den einander zugewandten Endbereichen des Dichtungsträgers oder des ersten Dichtungsträgerteils und des Distanzrings zur Drehachse der Flanschwelle parallele und zueinander koaxiale zweite Positionierbohrungen ausgebildet sind, in die ein gemeinsamer zweiter Positionierzapfen eingesetzt ist und wobei eine zur Drehachse der Flanschwelle parallele und zur dem Dichtungsträger abgewandten Seite hin offene dritte Positionierbohrung hälftig in dem Distanzring und dem Achstrichter ausgebildet ist, in die ein dritter Positionierzapfen eingesetzt ist.

Dadurch sind über die zweiten Positionierzapfen der Dichtungsträger oder der erste Dichtungsträgerteil zu dem Distanzring in der Sollposition verdrehsicher positioniert, sowie auch der Distanzring und mit ihm der Dichtungsträger oder erste Dichtungsträgerteil in der Sollposition in der Koaxialöffnung des Achstrichters verdrehsicher positioniert.

Damit ist auch beim Einbau die Baugruppe aus Distanzring, Dichtungträger, Luftdichtringen und ggf. Wellendichtungen exakt in ihre Sollposition bringbar, indem eine in ihrem Querschnitt dem dritten Positionierzapfen entsprechende Positionierstange in die im Achstrichter ausgebildete Hälfte der dritten Positionierbohrung eingesetzt wird, um dann die Baugruppe mit der im Distanzring ausgebildeten Hälfte der dritten Positionierbohrung an der Positionierstange geführt in die Koaxialbohrung des Achstrichters einzuführen.

Ein Ausführungsbeispiel der Erfindung ist in der Zeichnung dargestellt und wird im Folgenden näher beschrieben. Es zeigen:

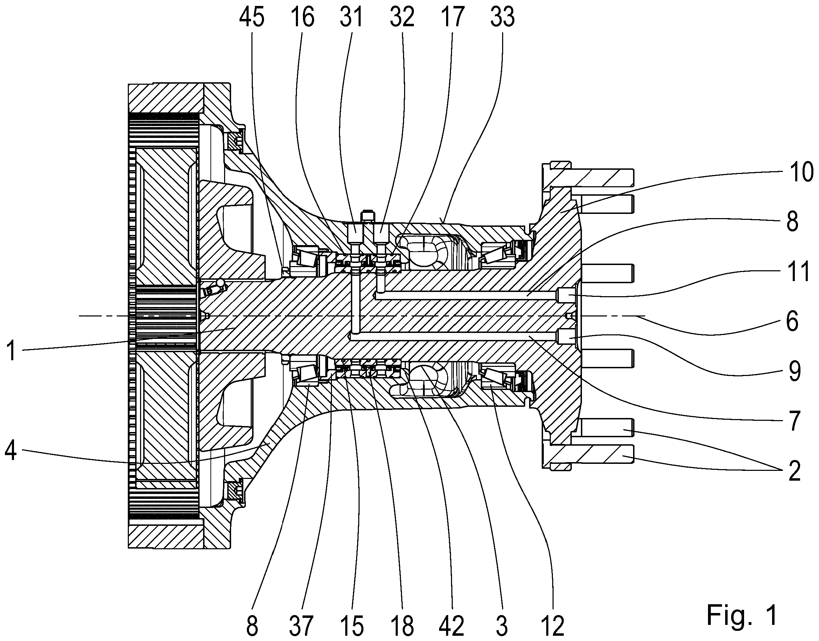

- Figur 1: einen ersten Längsschnitt einer in einem Achstrichter angeordneten Flanschwelle mit einer Befülleinrichtung

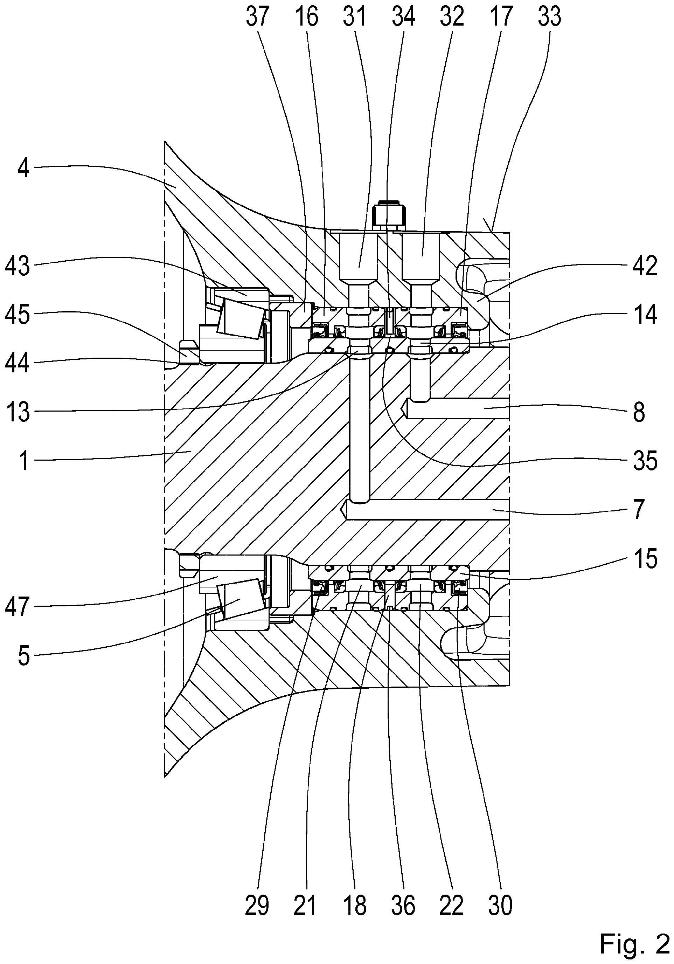

- Figur 2: einen vergrößerten Ausschnitt aus Figur 1

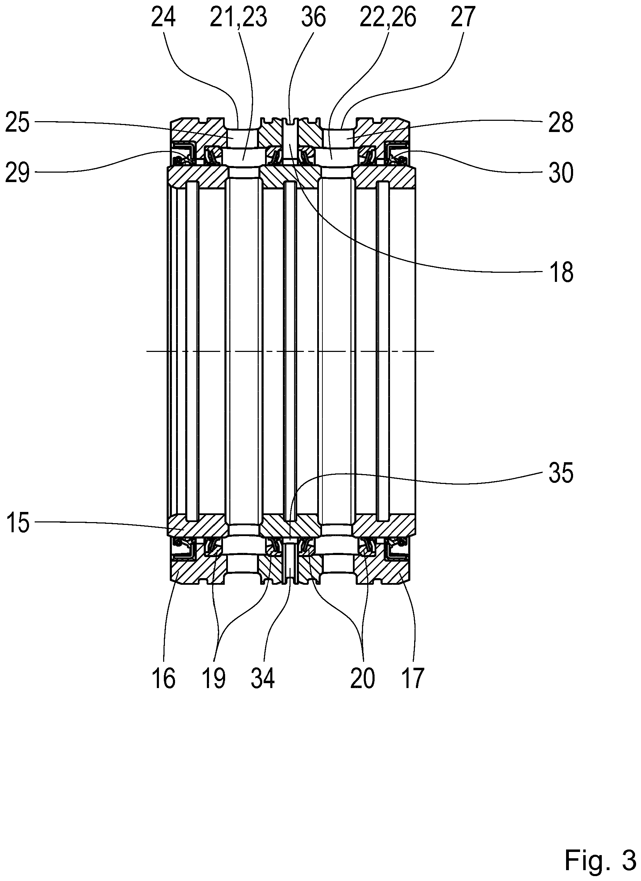

- Figur 3: eine vergrößerte Darstellung der Baugruppe aus Dichtungsträger, Luftdichtringen, Wellendichtungen sowie des Laufrings der Befülleinrichtung nach Figur 1 im Längsschnitt

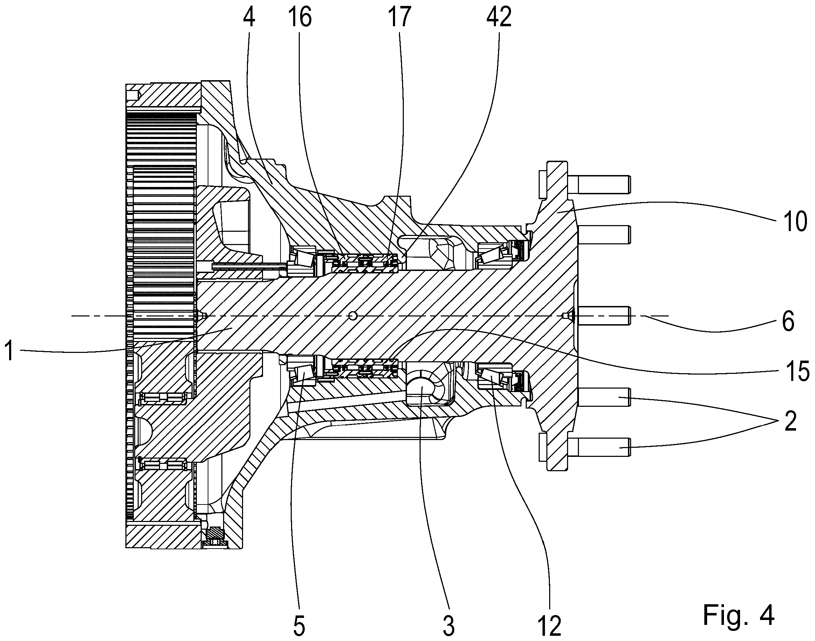

- Figur 4: einen zweiten Längsschnitt der in einem Achstrichter angeordneten Flanschwelle mit einer Befülleinrichtung nach Figur 1

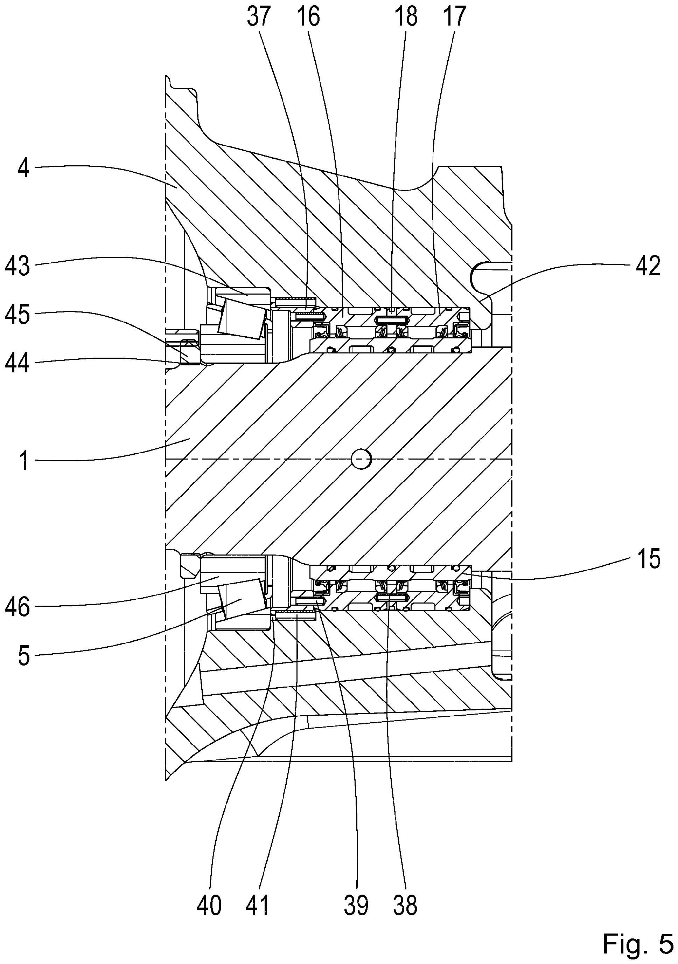

- Figur 5: einen vergrößerten Ausschnitt aus Figur 4

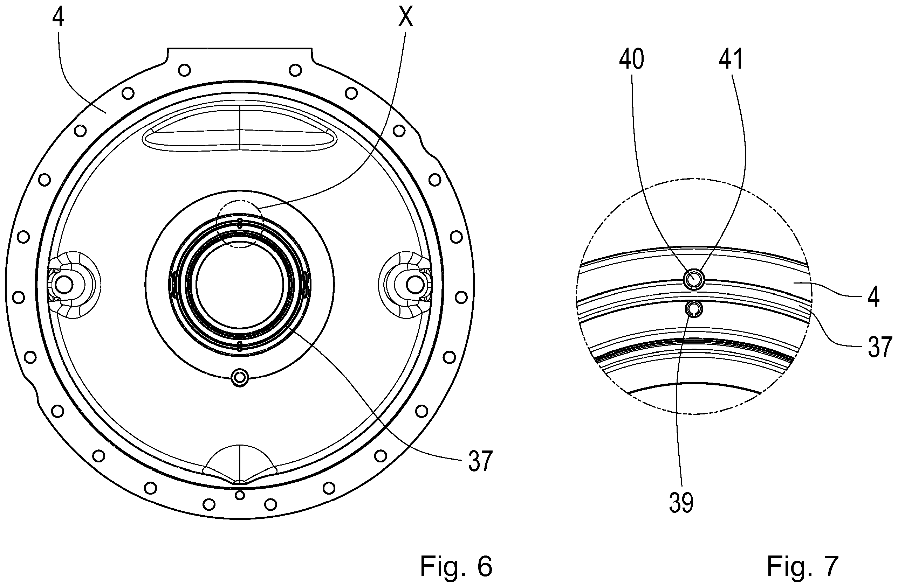

- Figur 6: eine Stirnansicht von Achstrichter und Distanzring der Befülleinrichtung nach Figur 1
- Figur 7: ein vergrößerter Ausschnitt "X" aus Figur 6.

In den Figurenl und 2 ist eine Flanschwelle 1 dargestellt, die an ihrem einen Ende einen radial erweiterten Anflanschteller 10 zum Anflanschen einer nicht dargestellten Felge mittels Radbolzen 2 aufweist. Auf der Felge ist ein Reifen angeordnet, dessen Innendruck durch ein ebenfalls nicht dargestelltes fahrzeugseitiges Druckregelsystem variierbar ist.

Die Flanschwelle 1 durchragt eine Koaxialöffnung 3 eines Achstrichters 4, in der die Flanschwelle 1 mittels zweier im Abstand zueinander in O-Anordnung angeordneter Kegelrollenlager 5 und 12 um eine Drehachse 6 drehbar gelagert ist.

In der Flanschwelle 1 sind parallel zur Drehachse ein erster Druckkanal 7 und ein zweiter Druckkanal 8 ausgebildet, wobei der erste Druckkanal 7 mit seinem ersten Ende an einem ersten Druckabgang 9 am Anflanschteller 10 axial nach außen mündet. Der zweite Druckkanal 8 mündet mit seinem ersten Ende an einem zweiten Druckabgang 11 am Anflanschteller 10 axial nach außen.

Die Druckabgänge 9 und 11 sind mit dem nicht dargestellten Reifen verbunden.

Das zweite Ende des ersten Druckkanals 7 und das zweite Ende des zweiten Druckkanals 8 sind radial nach außen geführt und münden zwischen den Kegelrollenlagern 5 und 12 axial zueinander versetzt an der radial umlaufenden Mantelfläche der Flanschwelle 1 nach außen.

Auf der Flanschwelle 1 ist ein rohrartiger Laufring 15 mittels einer Presspassung drehfest derart angeordnet, dass ein darin radial durchgehend ausgebildeter erster radialer Durchgang 13 mit dem zweiten Ende des ersten Druckkanals 7 und ein radial durchgehend ausgebildeter zweiter radialer Durchgang 14 mit dem zweiten Ende des zweiten Druckkanals 8 in Überdeckung ist.

Der Laufring ist wiederum von einem in die Koaxialöffnung des Achstrichters drehfest eingesetzten Dichtungsträger umschlossen, der aus zwei koaxial zueinander entgegengerichteten Dichtungsträgerteilen 16 und 17 besteht, zwischen denen Distanzring 18 angeordnet ist.

An jedem Dichtungsträgerteil 16 und 17 ist in einem axialen Abstand zueinander ein Paar Luftdichtringe 19 und 20 angeordnet, deren Dichtlippen in Gleitkontakt mit der äußeren zylindrischen Mantelfläche des Laufrings 15 sind.

Das erste Paar Luftdichtringe 19 bildet zwischen sich einen ersten Luftringkanal 21, in den der erste Durchgang 13 mündet und das zweite Paar Luftdichtringe 20 bildet zwischen sich einen zweiten Luftringkanal 22, in den der zweite Durchgang 14 mündet.

Der Dichtungsträgerteil 16 weist im Bereich des ersten Luftringkanals 21 an seiner inneren radial umlaufenden Mantelfläche eine erste Innenringnut 23 und an seiner äußeren radial umlaufenden Mantelfläche eine erste Außenringnut 24 auf, wobei die erste Innenringnut 23 mit der ersten Außenringnut 24 durch einen ersten Radialkanal 25 verbunden ist.

Der Dichtungsträgerteil 17 weist im Bereich des zweiten Luftringkanals 22 an seiner inneren radial umlaufenden Mantelfläche eine zweite Innenringnut 26 und an seiner äußeren radial umlaufenden Mantelfläche eine zweite Außenringnut 27 auf, wobei die erste Innenringnut 26 mit der zweiten Außenringnut 27 durch einen zweiten Radialkanal 28 verbunden ist.

An den einander abgewandten axialen Endbereichen der Dichtungsträgerteile 16 und 17 ist jeweils ein Wellendichtring 29, 30 angeordnet. Die Dichtlippen der Wellendichtringe 29, 30 sind in Gleitkontakt mit der äußeren zylindrischen Mantelfläche des Laufrings 15.

Von der ersten Außenringnut 24 führt ein im Achstrichter 4 radial ausgebildeter erster Druckanschluss 31 zur radial umlaufenden Außenmantelfläche 33 des Achstrichters 4, während von der zweiten Außenringnut 27 ein im Achstrichter 4 radial ausgebildeter zweiter Druckanschluss 32 zur radial umlaufenden Außenmantelfläche 33 des Achstrichters 4 führt. Die Druckanschlüsse 31 und 32 sind an ein nicht dargestelltes fahrzeugseitiges Druckregelsystem anschließbar.

In dem Distanzring 18 ist ein radial durchgehender Entlüftungskanal 34 ausgebildet, der von dem Ringbereich 35 zwischen den beiden Paaren von Luftdichtringen 19 und 20 zu einem an der äußeren Mantelfläche des Distanzrings 18 radial umlaufenden Entlüftungsringkanal 36 führt. Von diesem Entlüftungsringkanal 36 führt wiederum eine im Achstrichter 4 ausgebildete, nicht dargestellte Lüftungsbohrung zur radial umlaufenden Außenmantelfläche 33 des Achstrichters und mündet nach außen.

Die beiden Dichtungsträgerteile 16 und 17 mit den Paaren von Luftdichtringen 19 und 20 sowie den Wellendichtringen 29 und 30 und der Distanzring 18 bilden zusammen mit einem zweiten Distanzring 37 eine vormontierbare Baueinheit. Dazu weisen die beiden Dichtungsträgerteile 16 und 17 an ihren einander zugewandten Endbereichen sowie der Distanzring 18 zur Drehachse 6 parallele, koaxiale Positionierbohrungen auf, in die als Spannstifte ausgebildete gemeinsame Positionierzapfen 38 einesetzt sind.

Der zweite Distanzring 37 ist zwischen dem ersten Kegelrollenlager 5 und dem ersten Dichtungsträgerteil 16 in die Koaxialöffnung 3 des Achstrichters 4 axail verschiebbar eingesetzt. Das erste Dichtungsträgerteil 16 und der zweite Distanzring 38 weisen an ihren einander zugewandten Endbereichen zur Drehachse 6 parallele, koaxiale zweite Positionierbohrungen auf, in die als zweite Spannstifte ausgebildete gemeinsame zweite Positionierzapfen 39 einesetzt sind.

Durch die in die Positionierbohrungen eingesetzten Positionierzapfen 38, 39 wird die gesamte Baugruppe in korrekter Position zueinander ausgerichtet.

Im Bereich des zweiten Distanzringes 37 sind dritte Positionierbohrungen 40 hälftig in dem zweiten Distanzring 37 und dem Achstrichter 4 ausgebildet, die zur Drehachse 6 parallel erstrecken und in die als Spannstifte ausgebildete dritte Positionierzapfen 41 ragen. Dadurch sind nicht nur die Teile der Baugruppe aus zweitem Distanzring 37, erstem Dichtungstragerteil 16, erstem Distanzring 18 und zweitem Dichtungsträgerteil 17 zueinander ausgerichtet sondern auch die ganze Baugruppe in ihre richtige Sollposition in der Koaxialöffnung 3 des Achstrichters 4 ausgerichtet eingesetzt sowie gegen Verdrehen um die Drehachse 6 gesichert.

Diese Baugruppe wird von links in die Koaxialöffnung 3 bis zur axialen Anlage an einem Anschlagring 42 des Achstrichters 4 eingeschoben. Danach erfolgt das Einsetzen des ersten Kegelrollenlagers 5 bis zur Anlage dessen Ausßenrings 43 an dem zweiten Distanzring 37.

Durch eine auf ein Gewinde 44 der Flanschwelle 1 bis zur axialen Beaufschlagung des Innenrings 46 aufgeschraubte Mutter 45 ist die gesamte Baugruppe axial in ihrer axialen Sollposition gesichert.

### Bezugszeichen

- 1: Flanschwelle
- 2: Radbolzen
- 3: Koaxialöffnung
- 4: Achstrichter
- 5: erstes Kegelrollenlager
- 6: Drehachse
- 7: erster Druckkanal
- 8: zweiter Druckkanal
- 9: erster Druckabgang
- 10: Anflanschteller
- 11: zweiter Druckabgang
- 12: zweites Kegelrollenlager
- 13: erster Durchgang
- 14: zweiter Durchgang
- 15: Laufring
- 16: erster Dichtungsträgerteil
- 17: zweiter Dichtungsträgerteil
- 18: Distanzring
- 19: erstes Paar Luftdichtringe
- 20: zweites Paar Luftdichtringe
- 21: erster Luftringkanal
- 22: zweiter Luftringkanal
- 23: erste Innenringnut
- 24: erste Außenringnut
- 25: erster Radialkanal
- 26: zweite Innenringnut
- 27: zweite Außenringnut
- 28: zweiter Radialkanal
- 29: erster Wellendichtring
- 30: zweiter Wellendichtring
- 31: erster Druckanschluss
- 32: zweiter Druckanschluss
- 33: Außenmantelfläche
- 34: Entlüftungskanal
- 35: Ringbereich
- 36: Entlüftungsringkanal
- 37: zweiter Distanzring
- 38: erster Positionierzapfen
- 39: zweiter Positionierzapfen
- 40: dritte Positionierbohrungen
- 41: dritte Positionierbohrungen
- 42: Anschlagring
- 43: Außenring
- 44: Gewinde
- 45: Mutter
- 46: Innenring

## Patentansprüche

1. Befülleinrichtung zur fahrzeugseitigen Innendruckregelung eines Reifens eines Fahrzeugrades, mit einer drehbar gelagerten Flanschwelle (1), die an ihrem einen Ende einen radial erweiterten Anflanschteller (10) zum Anflanschen einer Felge aufweist, wobei die Flanschwelle (1) durch eine Koaxialöffnung (3) eines drehfesten Achstrichters (4) ragt, mit einem ersten Druckkanal (7), der axial in der Flanschwelle (1) ausgebildet ist und mit seinem ersten Ende an einem ersten Druckabgang (9) am Anflanschteller (10) axial nach außen mündet, sowie mit einem zweiten Druckkanal (8), der axial in der Flanschwelle (1) ausgebildet ist und mit seinem ersten Ende an einem zweiten Druckabgang (11) am Anflanschteller (10) axial nach außen mündet, wobei das zweite Ende des ersten Druckkanals (7) sowie das zweite Ende des zweiten Druckkanals (8) axial zueinander versetzt, radial an der umlaufenden Mantelfläche der Fanschwelle (1) nach außen in die Flanschwelle umschließende Luftringkanäle (21, 22) münden, die jeweils zwischen einem Paar drehfest am Achstrichter angeordneter, die Flanschwelle (1) umschließender Luftdichtringe (19, 20) gebildet sind und von denen ein erster Druckanschluß (31) und ein zweiter Druckanschluß (32), die im Achstrichter (4) ausgebildet sind, zur radial umlaufenden Außenmantelfläche (33) des Achstrichters (4) führen, wobei in die Koaxialöffnung (3) des Achstrichters (4) ein ringartiger Dichtungsträger drehfest eingesetzt ist, in dessen radial umlaufender Innenöffnung die Paare von Luftdichtringen (19, 20) koaxial zueinander angeordnet sind, wobei der Dichtungsträger im Bereich zwischen jedem Paar der Luftdichtringe (19, 20) an seiner inneren radial umlaufenden Mantelfläche eine Innenringnut (23, 26) und an seiner äußeren radial umlaufenden Mantelfläche eine Außenringnut (24, 27) aufweist, wobei die erste Innenringnut (23) mit der ihr radial zugeordneten erste Außenringnut (24) verbunden ist und die zweite Innenringnut (26) mit der ihr radial zugeordneten zweiten Außenringnut (27) verbunden ist und wobei die erste Außenringnut (24) mit dem ersten Druckanschluß (31) und die zweite Außenringnut (27) mit dem zweiten Druckanschluß (32) verbunden ist, **dadurch gekennzeichnet, dass** von einem Ringbereich (35) zwischen den beiden Paaren von Luftdichtringen (19, 20) ein radialer Entlüftungskanal (34) zu einem an der äußeren Mantelfläche des Dichtungsträgers oder des Distanzrings (15) ausgebildeten radial umlaufenden Entlüftungsringkanal (36) führt, der über eine im Achstrichter (4) ausgebildete Lüftungsbohrung zur radial umlaufenden Außenmantelfläche (33) des Achstrichters (4) führt, wobei der radiale Entlüftungskanal (34) durch den Dichtungsträger oder durch einen Distanzring (18) zu dem Entlüftungsringkanal (36) führt, wobei bei der Durchführung durch den Distanzring (18) der Dichtungsträger aus einem ersten Dichtungsträgerteil (16) und einem dazu koaxialen zweiten Dichtungsträgerteil (17) besteht, axial zwischen denen der Distanzring (18) angeordnet ist.

2. Befülleinrichtung nach Anspruch 1, **dadurch gekennzeichnet, dass** radial innerhalb des Dichtungsträgers auf der Flanschwelle (1) ein Laufring (15) drehfest angeordnet ist, der einen von dem zweiten Ende des ersten Druckkanals (7) zu dem einen Luftringkanal (21) führenden ersten radialen Durchgang (13) und einen von dem zweiten Ende des zweiten Druckkanals (8) zu dem anderen Luftringkanal (22) führenden zweiten radialen Durchgang (14) aufweist wobei die Luftdichtringe in Gleitkontakt mit der zylindrischen äußeren Mantelfläche des Laufrings (15) sind.

3. Befülleinrichtung nach einem der vorhergehenden Ansprüche, **dadurch gekennzeichnet, dass** an dem einen axialen Ende des Dichtungsträgers ein erster Wellendichtring (29) und an dem zweiten axialen Ende des Dichtungsträgers zweiter Wellendichtring (30) angeordnet ist, die die Flanschwelle (1) umschließen.

4. Befülleinrichtung nach den Ansprüchen 2 und 3, **dadurch gekennzeichnet, dass** die Wellendichtringe (29, 30) in Gleitkontakt mit der zylindrischen äußeren Mantelfläche des Laufrings (15) sind.

5. Befülleinrichtung nach einem der vorhergehenden Ansprüche, **dadurch gekennzeichnet, dass** die Flanschwelle (1) mittels in die Koaxialöffnung (3) des Achstrichters (4) eingesetzter Wälzlager drehbar gelagert ist, wobei axial auf jeder Seite des Dichtungsträgers ein Wälzlager angeordnet ist.

6. Befülleinrichtung nach Anspruch 5, **dadurch gekennzeichnet, dass** die Wälzlager in O-Anordnung angeordnete Kegelrollenlager (5, 12) sind.

7. Befülleinrichtung nach Anspruch 6, **dadurch gekennzeichnet, dass** das eine Ende des Dichtungsträgers an einem Anschlagring (42) des Achstrichters (4) und das andere Ende des Dichtungsträgers direkt oder indirekt an dem Außenring (43) eines der Wälzlager (5) axial abgestützt ist.

8. Befülleinrichtung nach Anspruch 4, **dadurch gekennzeichnet, dass** in den einander zugewandten Endbereichen des ersten Dichtungsträgerteils (16) und des zweiten Dichtungsträgerteils (17) und ggf. in dem Distanzring (18) zur Drehachse (6) der Flanschwelle (1) parallele und zueinander koaxiale Positionierbohrungen ausgebildet sind, in die ein gemeinsamer Positionierzapfen (38) eingesetzt ist.

9. Befülleinrichtung den Ansprüchen 7 und 8, **dadurch gekennzeichnet, dass** der Dichtungsträger oder der erste Dichtungsträgerteil (16) über einen Distanzring (37) an dem Außenring (43) des Wälzlagers axial abgestützt ist, wobei in den einander zugewandten Endbereichen des Dichtungsträgers oder des ersten Dichtungsträgerteils (16) und des Distanzrings (37) zur Drehachse (6) der Flanschwelle (1) parallele und zueinander koaxiale zweite Positionierbohrungen ausgebildet sind, in die ein gemeinsamer zweiter Positionierzapfen (39) eingesetzt ist und wobei eine zur Drehachse (6) der Flanschwelle (1) parallele und zur dem Dichtungsträger oder dem ersten Dichtungsträgerteil (16) abgewandten Seite hin offene dritte Positionierbohrung (40) hälftig in dem Distanzring (37) und dem Achstrichter (4) ausgebildet ist, in die ein dritter Positionierzapfen (41) eingesetzt ist.

## Claims

1. Filling device for vehicle-side internal pressure control of a tyre of a vehicle wheel, with a rotatably mounted flanged shaft (1), which has at its one end a radially extended flange plate (10) for the flangemounting of a rim, wherein the flanged shaft (1) protrudes through a coaxial opening (3) of an axle funnel (4) fixed for conjoint rotation, with a first pressure channel (7), which is formed axially in the flanged shaft (1) and with its first end opens out axially outwards at a first pressure outlet (9) on the flange plate (10), and also with a second pressure channel (8), which is formed axially in the flanged shaft (1) and with its first end opens out axially outwards at a second pressure outlet (11) on the flange plate (10), wherein the second end of the first pressure channel (7) and the second end of the second pressure channel (8), axially offset in relation to one another, open out radially outwards at the running-around lateral surface of the flanged shaft (1) into annular air channels (21, 22) which enclose the flanged shaft, are respectively formed between a pair of air sealing rings (19, 20), arranged for conjoint rotation on the axial funnel and enclosing the flanged shaft (1), and of which a first pressure connection (31) and a second pressure connection (32), which are formed in the axle funnel (4), lead to the radially running-around outer lateral surface (33) of the axle funnel (4), wherein a ring-like seal carrier, in the radially running-around inner opening of which the pairs of air sealing rings (19, 20) are arranged coaxially to one another, is fitted for conjoint rotation in the coaxial opening (3) of the axle funnel (4), wherein the seal carrier has in the region between each pair of air sealing rings (19, 20) an inner annular groove (23, 26) on its inner radially running-around lateral surface and an outer annular groove (24, 27) on its outer radially running-around lateral surface, wherein the first inner annular groove (23) is connected to the first outer annular groove (24) radially assigned to it and the second inner annular groove (26) is connected to the second outer annular groove (27) radially assigned to it, and wherein the first outer annular groove (24) is connected to the first pressure connection (31) and the second outer annular groove (27) is connected to the second pressure connection (32), **characterized in that** a radial venting channel (34) leads from an annular region (35) between the two pairs of air sealing rings (19, 20) to a radially running-around annular venting channel (36), which is formed on the outer lateral surface of the seal carrier or of the spacer ring (15) and leads via a ventilating bore formed in the axle funnel (4) to the radially running-around outer lateral surface (33) of the axle funnel (4), wherein the radial venting channel (34) leads through the seal carrier or through a spacer ring (18) to the annular venting channel (36), wherein, at the lead-through through the spacer ring (18), the seal carrier consists of a first seal carrier part (16) and a second seal carrier part (17) coaxial thereto, axially between which the spacer ring (18) is arranged.

2. Filling device according to Claim 1, **characterized in that** arranged for conjoint rotation radially inside the seal carrier on the flanged shaft (1) is a running ring (15), which has a first radial passage (13), leading from the second end of the first pressure channel (7) to the one annular air channel (21), and a second radial passage (14), leading from the second end of the second pressure channel (8) to the other annular air channel (22), wherein the air sealing rings are in sliding contact with the cylindrical outer lateral surface of the running ring (15) .

3. Filling device according to either of the preceding claims, **characterized in that** a first shaft sealing ring (29) is arranged at the one axial end of the seal carrier and second shaft sealing ring (30) is arranged at the second axial end of the seal carrier, which rings enclose the flanged shaft (1).

4. Filling device according to Claims 2 and 3, **characterized in that** the shaft sealing rings (29, 30) are in sliding contact with the cylindrical outer lateral surface of the running ring (15).

5. Filling device according to one of the preceding claims, **characterized in that** the flanged shaft (1) is rotatably mounted by means of rolling bearings fitted in the coaxial opening (3) of the axle funnel (4), wherein a rolling bearing is arranged on each side of the seal carrier.

6. Filling device according to Claim 5, **characterized in that** the rolling bearings are tapered roller bearings (5, 12) arranged in an O arrangement.

7. Filling device according to Claim 6, **characterized in that** the one end of the seal carrier is axially supported on a stop ring (42) of the axle funnel (4) and the other end of the seal carrier is axially supported directly or indirectly on the outer ring (43) of one of the roller bearings (5).

8. Filling device according to Claim 4, **characterized in that** positioning bores, which are parallel to the axis of rotation (6) of the flanged shaft (1) and coaxial to one another and in which a common positioning pin (38) is fitted, are formed in the mutually facing end regions of the first seal carrier part (16) and the second seal carrier part (17) and possibly in the spacer ring (18).

9. Filling device Claims 7 and 8, **characterized in that** the seal carrier or the first seal carrier part (16) is axially supported by way of a spacer ring (37) on the outer ring (43) of the rolling bearing, wherein second positioning bores, which are parallel to the axis of rotation (6) of the flanged shaft (1) and coaxial to one another and in which a common second positioning pin (39) is fitted, are formed in the mutually facing end regions of the seal carrier or of the first seal carrier part (16) and the spacer ring (37) and wherein a third positioning bore (40), which is parallel to the axis of rotation (6) of the flanged shaft (1) and open towards the side facing away from the seal carrier or the first seal carrier part (16) and in which a third positioning pin (41) is fitted, is formed half in the spacer ring (37) and half the axle funnel (4).

## Revendications

1. Dispositif de remplissage pour la régulation de la pression interne, côté véhicule, d'un pneu d'une roue de véhicule, comportant un arbre à bride (1) monté rotatif, qui comprend à l'une de ses extrémités un disque de bride (10) élargi radialement pour brider une jante, l'arbre à bride (1) faisant saillie à travers une ouverture coaxiale (3) d'une trompette d'essieu (4) bloquée en rotation, comportant un premier canal de pression (7), qui est réalisé axialement dans l'arbre à bride (1) et débouche axialement vers l'extérieur par sa première extrémité au niveau d'une première sortie de pression (9) sur le disque de bride (10), et comportant un deuxième canal de pression (8), qui est réalisé axialement dans l'arbre à bride (1) et débouche axialement vers l'extérieur par sa première extrémité au niveau d'une deuxième sortie de pression (11) sur le disque de bride (10), la deuxième extrémité du premier canal de pression (7) ainsi que la deuxième extrémité du deuxième canal de pression (8) débouchant vers l'extérieur dans des canaux annulaires d'air (21, 22) entourant l'arbre à bride de manière décalée axialement l'une par rapport à l'autre, radialement au niveau de la surface d'enveloppe périphérique de l'arbre à bride (1), lesquels canaux sont formés respectivement entre une paire de bagues d'étanchéité à l'air (19, 20) disposées de manière bloquée en rotation sur la trompette d'essieu et entourant l'arbre à bride (1) et à partir desquels un premier raccord de pression (31) et un deuxième raccord de pression (32), qui sont réalisés dans la trompette d'essieu (4), mènent jusqu'à la surface d'enveloppe extérieure (33) radialement périphérique de la trompette d'essieu (4), un support de joint d'étanchéité annulaire étant inséré de manière bloquée en rotation dans l'ouverture coaxiale (3) de la trompette d'essieu (4), support dans l'ouverture intérieure radialement périphérique duquel les paires de bagues d'étanchéité à l'air (19, 20) sont disposées coaxialement les unes aux autres, le support de joint d'étanchéité comprenant, dans la région entre chaque paire de bagues d'étanchéité à l'air (19, 20) au niveau de sa surface d'enveloppe intérieure radialement périphérique, une rainure annulaire intérieure (23, 26) et, au niveau de sa surface d'enveloppe extérieure radialement périphérique, une rainure annulaire extérieure (24, 27), la première rainure annulaire intérieure (23) étant reliée à la première rainure annulaire extérieure (24) associée à celle-ci et la deuxième rainure annulaire intérieure (26) étant reliée à la deuxième rainure annulaire extérieure (27) associée à celle-ci et la première rainure annulaire extérieure (24) étant reliée au premier raccord de pression (31) et la deuxième rainure annulaire extérieure (27) étant reliée au deuxième raccord de pression (32), **caractérisé en ce qu'**à partir d'une région annulaire (35) entre les deux paires de bagues d'étanchéité à l'air (19, 20) un canal de ventilation radial (34) mène jusqu'à un canal annulaire de ventilation (36) radialement périphérique réalisé au niveau de la surface d'enveloppe extérieure du support de joint d'étanchéité ou de la bague d'écartement (15), lequel canal annulaire de ventilation mène jusqu'à la surface d'enveloppe extérieure (33) radialement périphérique de la trompette d'essieu (4) via un alésage d'aération réalisé dans la trompette d'essieu (4), le canal de ventilation radial (34) menant à travers le support de joint d'étanchéité ou à travers une bague d'écartement (18) jusqu'au canal annulaire de ventilation (36), et dans le cas du passage à travers la bague d'écartement (18), le support de joint d'étanchéité étant constitué d'une première partie de support de joint d'étanchéité (16) et d'une deuxième partie de support de joint d'étanchéité (17) coaxiale à celle-ci, parties axialement entre lesquelles la bague d'écartement (18) est disposée.

2. Dispositif de remplissage selon la revendication 1, **caractérisé en ce qu'**une bague de roulement (15) est disposée de manière solidaire en rotation sur l'arbre à bride (1) radialement à l'intérieur du support de joint d'étanchéité, laquelle bague de roulement comprend un premier passage radial (13) menant de la deuxième extrémité du premier canal de pression (7) à l'un des canaux annulaires d'air (21) et un deuxième passage radial (14) menant de la deuxième extrémité du deuxième canal de pression (8) à l'autre canal annulaire d'air (22), les bagues d'étanchéité à l'air étant en contact glissant avec la surface d'enveloppe extérieure cylindrique de la bague de roulement (15).

3. Dispositif de remplissage selon l'une des revendications précédentes, **caractérisé en ce qu'**une première bague d'étanchéité d'arbre (29) est disposée à l'une des extrémités axiales du support de joint d'étanchéité et deuxième bague d'étanchéité d'arbre (30) est disposée à la deuxième extrémité axiale du support de joint d'étanchéité, lesquelles bagues d'étanchéité entourent l'arbre à bride (1).

4. Dispositif de remplissage selon les revendications 2 et 3, **caractérisé en ce que** les bagues d'étanchéité d'arbre (29, 30) sont en contact glissant avec la surface d'enveloppe extérieure cylindrique de la bague de roulement (15).

5. Dispositif de remplissage selon l'une des revendications précédentes, **caractérisé en ce que** l'arbre à bride (1) est monté rotatif au moyen de paliers à roulement insérés dans l'ouverture coaxiale (3) de la trompette d'essieu (4), un palier à roulement étant disposé axialement sur chaque côté du support de joint d'étanchéité.

6. Dispositif de remplissage selon la revendication 5, **caractérisé en ce que** les paliers à roulement sont des paliers à rouleaux coniques (5, 12) disposés suivant un agencement en O.

7. Dispositif de remplissage selon la revendication 6, **caractérisé en ce qu'**une extrémité du support de joint d'étanchéité est supportée axialement sur une bague de butée (42) de la trompette d'essieu (4) et l'autre extrémité du support de joint d'étanchéité est supportée axialement directement ou indirectement sur la bague extérieure (43) de l'un des paliers à roulement (5).

8. Dispositif de remplissage selon la revendication 4, **caractérisé en ce que** des alésages de positionnement parallèles à l'axe de rotation (6) de l'arbre à bride (1) et coaxiaux les uns aux autres sont réalisés dans les régions d'extrémité tournées l'une vers l'autre de la première partie de support de joint d'étanchéité (16) et de la deuxième partie de support de joint d'étanchéité (17) et éventuellement dans la bague d'écartement (18), alésages de positionnement dans lesquels une goupille de positionnement commune (38) est insérée.

9. Dispositif de remplissage les revendications 7 et 8, **caractérisé en ce que** le support de joint d'étanchéité ou la première partie de support de joint d'étanchéité (16) est supporté(e) axialement sur la bague extérieure (43) du palier à roulement par le biais d'une bague d'écartement (37), des deuxièmes alésages de positionnement parallèles à l'axe de rotation (6) de l'arbre à bride (1) et coaxiaux les uns aux autres étant réalisés dans les régions d'extrémité tournées l'une vers l'autre du support de joint d'étanchéité ou de la première partie de support de joint d'étanchéité (16) et de la bague d'écartement (37), deuxièmes alésages dans lesquels est insérée une deuxième goupille de positionnement commune (39), et un troisième alésage de positionnement (40) parallèle à l'axe de rotation (6) de l'arbre à bride (1) et ouvert en direction du côté opposé au support de joint d'étanchéité ou à la première partie de support de joint d'étanchéité (16) étant réalisé pour moitié dans la bague d'écartement (37) et pour moitié la trompette d'essieu (4), troisième alésage de positionnement dans lequel une troisième goupille de positionnement (41) est insérée.
